# EUROPEAN PATENT APPLICATION

(11) **EP 0 897 206 A1**
(43) Date of publication of application: **17.02.1999**
(21) Application number: 98901071.5
(22) Date of filing: 30.01.1998
(51) Int. Cl.: H01S 3/06

(54) **LASER OSCILLATOR**

(30) Priority: 30.01.1997 JP 29859/97
(71) Applicant: FANUC LTD., Minamitsuru-gun, Yamanashi 401-05 (JP)
(72) Inventor: KARUBE, Norio, Machida-shi, Tokyo 194 (JP); IKESUE, Akio, Fanuc Manshonharimomi, Oshino-mura, Minamitsuru-gun, Yamanashi, (JP); SATO, Yoichi, Fujiyoshida-shi, Yamanashi 403 (JP)
(74) Representative: Billington, Lawrence Emlyn
(86) International application number: JP9800403
(87) International publication number: WO9834305

(57) **Abstract**

A laser oscillator with a small resonator loss which is capable of using a solid gain medium without highly polish. A solid gain medium (1) is contained in a transparent container (3) in a manner such that the solid gain medium (1) is immersed in liquid (2) having a refractive index matching a refractive index of the solid gain medium (1). When excitation light (50) is radiated to the transparent container (3), the solid gain medium (1) is laser-excited, laser oscillation starts in an optical resonator constituted by a rear mirror M1 and an output mirror M2, and a laser beam S' is outputted from the output mirror M2. Since the solid gain medium (1) is immersed in the index matching liquid (2), scattering of the light on a boundary face is suppressed even when the solid gain medium has a rough surface. By circulating the index matching liquid (2) using a circulating cooling device (8), a rise in temperature inside and outside the transparent container (3) is prevented.

## Description

### Technical Field

The present invention relates to a technical improvement of a laser oscillator for use in a laser machining apparatus, etc., and more specifically to a technical improvement for facilitating preparation of solid gain mediums to be disposed in a optical resonator to thereby reduce manufacturing cost.

### Background Art

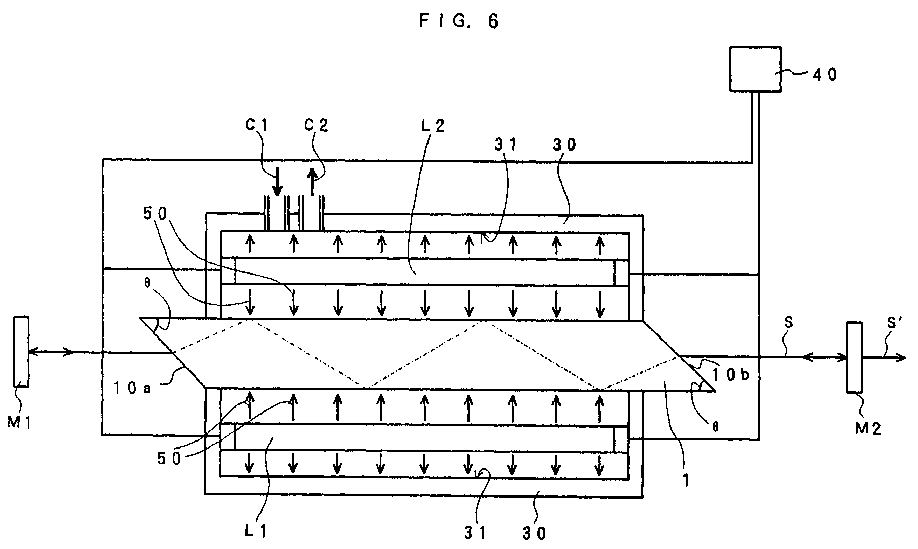

A laser oscillator using solid body such as Ti-doped Al₂O₃, Nd-doped YAG (monocrystal or polycrystal) as a laser gain medium (which is hereinafter referred to as "solid laser oscillator") is adopted generally in a laser machining apparatus for performing cutting, welding, etc. of metallic or non-metallic materials, because such laser oscillator is capable of providing a stable laser beam of high-power. FIG. 6 schematically shows a structure of a conventional slab-type solid laser oscillator by way of example.

In FIG. 6, a solid gain medium (Ti:AlO₃, Nd:YAG, etc.) 1 is disposed in a reflector 30 together with excitation lamps L1, L2 which are xenon lamps, for example. A rear mirror (total reflection mirror) M1 and an output mirror (partial reflection mirror) M2 are arranged beside each end of the solid gain medium 1 to constitute an optical resonator. The inner wall 31 of the reflector 30 is formed to be a face of a high optical reflectance.

Various components of the device including the solid gain medium, the excitation lamps and the reflector are prevented from overheat by flowing cooling water (demineralized water) to circulate in the reflector 30, so as to prevent quality deterioration of a laser beam due to a rise of temperature. Arrows C1 and C2 indicate an inlet and an outlet of the cooling water for circulation. The excitation lamps L1, L2 are driven by an excitation power source 40 to radiate excitation light 50.

The excitation light 50 radiated from the excitation lamps L1, L2 enters the solid gain medium 1 directly or after being reflected by the inner wall 31 of the reflector 30 of a high optical reflectance, so that the solid gain medium 1 is subjected to pumping to generate a laser beam S. The laser beam is amplified while it reciprocates within the space of the optical resonator, and a part of the laser beam S' is taken out for use in laser machining, etc.

Generally, the whole or a part of the surface of the solid gain medium 1 is directly in contact with the cooling water (demineralized water). Therefore, the light enters and goes out of the solid gain medium 1 through a boundary of the solid gain medium 1 and the cooling water (demineralized water) or air. Needless to say, there is a considerably large difference in refractive index between the solid gain medium 1 and the cooling water (demineralized water) or air. For example, when the solid gain medium 1 is Ti:Al₂O₃, the refractive index of the solid gain medium 1 is approximately 1.77, while the refractive index of demineralized water is approximately 1.33 and the refractive index of air is approximately 1.0 at an ordinary temperature.

Therefore, each end face 10a, 10b of the solid gain medium 1 is cut with an angle substantially satisfying the Brewster's condition in order to keep the efficiency of the optical resonator high. In the case where the solid gain medium is YAG, the Brewster's angle is approximately 60° to 62°. In the arrangement of this example where the total reflection mirror M1, the solid gain medium 1 and the partial reflection mirror 2 are aligned, the tilt angle θ of each end face 10a, 10b of the solid gain medium 1 is set to approximately 28° to 30°.

The solid gain medium 1 used in the conventional device as described above is polished to a high degree so that the entire surface of the solid gain medium 1 including both end faces 10a, 10b, which are cut to satisfy the Brewster's condition, has no irregularities. This is done for restraining a resonator loss caused by scattering of light on the boundary of the solid gain medium 1 and a medium surrounding the solid gain medium 1 (demineralized water in the example shown in FIG 6; gas such as air in some case).

FIG. 5 is an illustration for explaining behavior of the light in the vicinity of a surface 1a which forms a boundary face between the solid gain medium 1 and the medium (water, air and the like) 60 surrounding the solid gain medium 1 in the case where the surface of the solid gain medium 1 is rough (that is, not polished or not sufficiently polished). As shown in FIG. 5, when there is a large difference between refractive indices on both sides of the surface 1a of the solid gain medium 1, a part of incident light 50 inters to become transmitted light 51 and a large part thereof is reflected to become reflected light 52. Due to irregularities of the rough surface 1a, the traveling directions of the transmitted light 51 and the reflected light 52 relative to the traveling direction of the incident light 50 are irregular.

Such scattering phenomenon of the light also happens when the light goes from the inside of the solid gain medium 1 to the outside (water, air and the like) 60. Generally, such scattering of the light on the surface 1a of the solid gain medium 1 increases as the difference in refractive index between the solid gain medium 1 and the outside (water, air or the like) 60 is large and as the roughness of the surface 1a is large. The resonator loss also increases, accordingly. This is why conventional devices require a highly smooth surface 1a of the solid gain medium 1.

In order to make a highly smooth surface 1a of the solid gain medium 1, the surface of the solid gain medium 1 which is prepared in the form of a slab or a rod, needs to be carefully polished putting in time and cost. This requires a large burden in terms of time and cost.

### Disclosure of Invention

An object of the present invention is to provide a technique of improving a solid laser oscillator so that a large resonator loss is not caused even when a highly smooth surface is not given to a solid gain medium, and to thereby remove a large burden of time and cost required for polishing the surface of the solid gain medium 1.

A laser oscillator of the present invention comprises a solid gain medium; liquid having a refractive index matching a refractive index of the solid gain medium; an optical resonator; and a transparent container disposed in the optical resonator for containing the solid gain medium and the liquid in a state that the solid gain medium is immersed in the liquid. The surface of the solid gain medium may have an average roughness Ra of 1 nm or higher. It is ideal that the refractive index of the liquid agrees with the refractive index of the solid gain medium. From a practical point of view, however, the refractive index of the liquid may be in the range of the refractive index of the solid gain medium ±15%, and preferably within the range of the refractive index of the solid gain medium ±5%.

The solid gain medium may comprise a plurality of bulk pieces (not so divided as to be a large number of particles). The transparent container may be in the form of a slab, a rod and the like. It is preferable that window portions of the transparent container is formed to satisfy Brewster's condition.

When oscillating a laser beam, the temperature of the liquid and the solid gain medium immersed in the liquid is expected to rise. In order to positively prevent the rise in temperature, a circulation system for cooling the liquid may be connected to the transparent container. In that case, a flowing direction of the liquid in the transparent container may be substantially parallel to an optical axis of the optical resonator, or alternatively crossing the optical axis of the optical resonator. The latter is particularly desirable in respect of cooling efficiency.

Typical examples of the solid gain medium are Al₂O₃, YAG, YAlO₃ YVO₄, S-VAP, GdVO₄, GLF, BYF, KYF, KLYF, KLGF, GGG, LOS, BGO including, as a dopant, luminescent substance such as lanthanoid, Cr, Ti.

The following is the reason why the resonator loss can be restrained without finishing the surface of the solid gain medium to have high smoothness, by using the solid gain medium as being immersed in the liquid having a refractive index matching that of the solid gain medium.

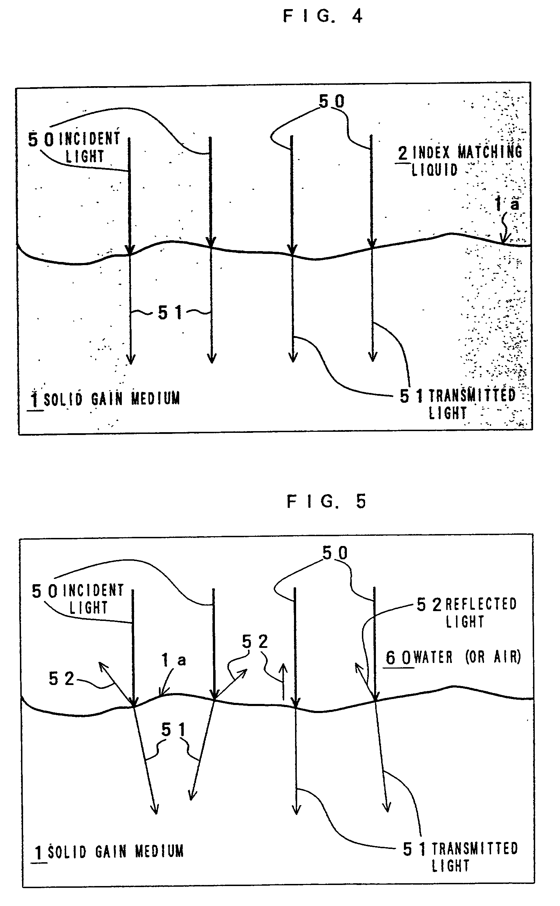

FIG. 4 illustrates behavior of the light in the vicinity of a surface 1a of the solid gain medium 1 in the case where the surface 1a is rough and in contact with index matching liquid 2 in a similar manner to the above mentioned FIG. 5.

Since the index matching liquid 2 has a refractive index equal to or nearly equal to the refractive index of the solid gain medium 1, when light 50 impinges on the surface 1a from the index matching liquid 2, all or a large part of the light enters the solid gain medium 1 to become transmitted light 51 and reflected light is not generated or generated only in a small quantity, as illustrated. Further, in spite of irregularities of the rough surface 1a, the traveling direction of the transmitted light 51 relative to the traveling direction of the incident light 50 is scarcely irregular because a difference between the refractive indices on both sides of the surface 1a is not large.

This applies to the light going from the inside of the solid gain medium 1 into the index matching liquid 2. Therefore, scattering of the light on the surface 1a of the solid gain medium 1 at the time the light comes into or goes out of the solid gain medium 1 is restrained by immersing the solid gain medium 1 in the index matching liquid 2. As a result, the resonator loss is not large even when the surface 1a of the solid gain medium 1 has irregularities. Such effect increases as a difference of refractive index between the solid gain medium 1 and the index matching liquid 2 becomes smaller.

It can be said that the present invention suppresses scattering of the light on the surface 1a of the solid gain medium 1 by using the index matching liquid 2 instead of providing the solid gain medium 1 with a highly smooth surface 1a as in conventional cases, to thereby reduce the resonator loss.

In other words, according to the present invention, efficiency and output comparable to those of conventionally structured laser oscillators using a solid gain medium highly polished can be obtained on the condition that a solid gain medium not polished or slightly polished (to a degree such that an average roughness Ra is less than 1 nm) is used.

### Brief Description of Drawings

FIG. 1 is a sectional view showing essential structure of a laser oscillator according to a first embodiment of the present invention;
FIG. 2 is a sectional view showing essential structure of a laser oscillator according to a second embodiment of the present invention;
FIG. 3 is a perspective view showing essential structure of a laser oscillator according to a third embodiment of the present invention;
FIG. 4 is a diagram illustrating behavior of light in the vicinity of a surface of a solid gain medium in the case where a surface of the solid gain medium is rough and in contact with index matching liquid;
FIG. 5 is a diagram illustrating behavior of light in the vicinity of a boundary between a solid gain medium and a medium surrounding the solid gain medium in the case where a surface of the solid gain medium is rough; and
FIG. 6 is a schematic diagram showing structure of a conventional solid laser oscillator.

### Best Mode of Carrying out the Invention

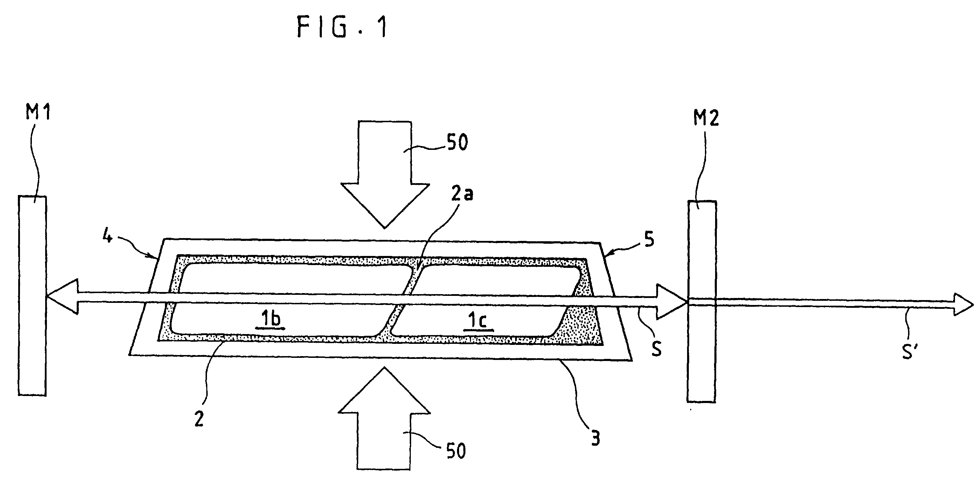

Preferable embodiments of the present invention will be described referring to FIGS. 1 to 3.

### [First Embodiment]

FIG. 1 shows essential structure of a laser oscillator according to a first embodiment. As shown in FIG. 1, two bulk pieces (monocrystal) 1b, 1c are used as the solid gain mediums in this embodiment. In accordance with characteristic features of the present invention, those solid gain mediums 1b and 1c are not polished or slightly polished (to a degree such that an average roughness Ra is not less than 1 nm), and contained in a transparent container 3 together with index matching liquid (filling liquid) 2.

The transparent container 3 containing the solid gain mediums 1b, 1c and the index matching liquid 2 is disposed in an optical resonator constituted by a rear mirror (a total reflection mirror) M1 and an output mirror (a partial transmission minor) M2.

The shown transparent container 3 is in the form of a slab, and window portions 4, 5 on both end faces thereof are formed with an angle satisfying the Brewster's condition relative to the outside (air). The container may be in the form of a rod instead of a slab. Further, the window portions are not necessarily formed on the condition satisfying the Brewster's angle. Such particulars concerning the form of the container are applied not only in this embodiment but also in the following second and third embodiments.

Material for the solid gain mediums 1b, 1c is, for example, Ti-doped Al₂O₃ or Nd-doped YAG (monocrystal). As examples of solid gain mediums other than Ti:Al₂O₃ and Nd:YAG, there are YAP, YLF, GGG, YVO₄, S-VAP, GdVO₄, GLF, BYF, KYF, KLYF, KLGF, LOF and BGO each doped with a dopant such as Yb, Cr, Nd, Er, Hf, etc.

It is appropriate to use the index matching liquid 2 having refractive index hardly different from the refractive index of the solid gain mediums 1b, 1c. Any of solid gain mediums for use in the laser oscillator, including the above mentioned examples of materials, has a refractive index quite higher than that of water (refractive index of about 1.33). Therefore, the index matching liquid 2 having a refractive index at least higher than that of water is used.

For example, when the gain medium of Ti:Al₂O₃ is used, the refractive index of Al₂O₃ is 1.77 or so, and that value scarcely changes when Al₂O₃ is doped with Ti. Therefore, as the index matching liquid 2, there can be used, for example, liquid prepared by mixing methylene iodide, white phosphorus and sulfur in the ratio of 1:8:1 into saturated solution, and diluting the saturated solution with methylene iodide to be about eleven times as thin as the saturated solution.

The refractive index can be regulated by changing dilution ratio for diluting the same saturated solution with methylene iodide. For example, liquid prepared by diluting the same saturated solution (produced by mixing methylene iodide, white phosphorus and sulfur in the ratio of 1:8:1) with methylene iodide to be about four times as thin as the saturated solution can be used as the index matching liquid suitable for the case where YAG is used for the solid gain medium.

In the present embodiment, two bulk pieces of solid 1b, 1c are used as solid gain mediums. It is also possible to use a single piece or three or more pieces. When two or more bulk pieces 1b, 1c are used, a gap 2a is formed between each two adjacent pieces 1b, 1c. However, since the gap 2a is also filled with the index matching liquid 2, loss caused by scattering of light at that portion is also restrained.

Needless to say, it is desirable to select the composition of the index matching liquid 2 so that the index matching liquid 2 has a small absorptance with respect to wavelengths of the laser beam and the excitation light, as well as it has a refractive index close to the refractive index of the solid gain medium.

Together with the index matching liquid 2 selected in consideration of the above, the solid gain mediums 1b, 1c are contained in the transparent container 3. When the excitation light 50 is radiated from excitation lamps (not shown) arranged at the side of the transparent container 3 to the transparent container 3, the solid gain mediums 1b, 1c immersed in the index matching liquid 2 are excited to generate a laser beam S. The laser beam S is amplified in the optical resonator constituted by the rear mirror M1 and the output mirror M2 and outputted from the output mirror M2 as a laser beam S'.

In the transparent container 3, the laser beam S travels through the index matching liquid 2 and the solid gain mediums 1b, 1c. Since change in refractive index on the boundary between the index matching liquid 2 and the solid gain medium 1b, 1c is small, scattering of the light does not occur significantly when light passes the boundary face as described above, so that it does not cause large resonator loss. Thus, according to this embodiment, there is provided a laser oscillator having a small resonator loss, in which solid gain mediums 1b, 1c are contained in a transparent container 3 together with index matching liquid 2.

Further, according to the present invention as in this embodiment, since the solid gain medium is immersed in the index matching liquid, a plurality of bulk pieces of solid (not so divided as to be a large number of particles) can be used as solid gain mediums without a large loss due to scattering of the light.

It is to be noted that the "transparent container" used in the laser oscillator according to the present invention including this embodiment does not necessarily need to be transparent with its all portions. However, in addition to the window portions 4, 5 through which the laser beam S goes and returns within the resonator, the portions through which the excitation light 50 is introduced need to be transparent.

### [Second embodiment]

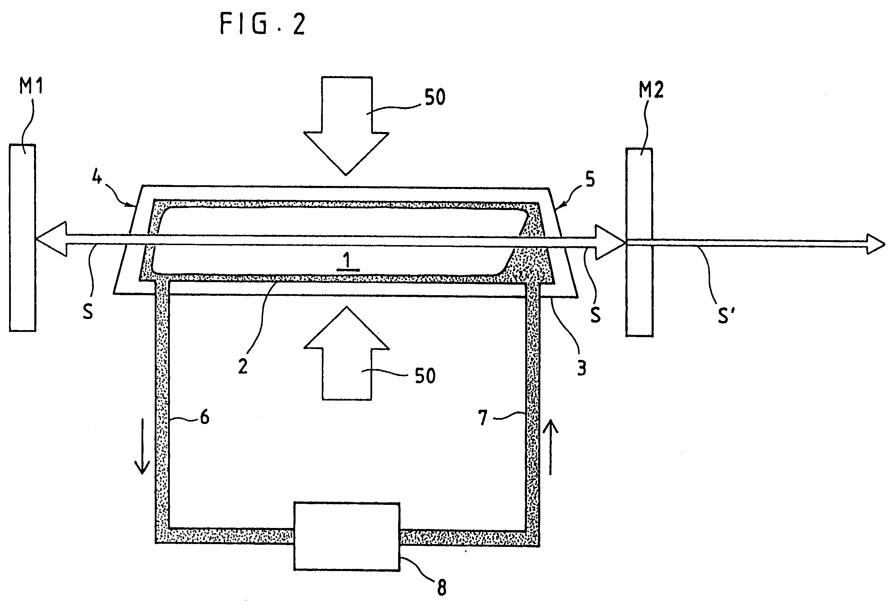

FIG. 2 shows essential structure of a laser oscillator of a second embodiment in the same manner as in FIG. 1. The laser oscillator of this embodiment has structure such that a circulating cooling system for index matching liquid is added to the structure similar to that of the first embodiment show in FIG. 1. The index matching liquid circulating system has conducting pipes 6, 7 connected to the transparent container 3 at both end portions thereof, and a circulating cooling device 8 for index matching liquid is provided in the middle of the conducting pipe.

As the circulating cooling device 8 for index matching liquid, a cooling device having a circulating pump for circulating the index matching liquid 2 and a cooler for cooling the index matching liquid 2 can be used as in the case of circulating and cooling an ordinary liquid. If sufficient cooling by heat radiation is ensured only by circulating the index matching liquid 2, the index matching liquid circulating cooling device 8 may be of structure having no cooler. A filter for removing extraneous matter are provided if necessary, as in an ordinary circulation system.

The structure of the portions other than the index matching liquid circulating system is approximately the same as that of the laser oscillator according to the first embodiment. The solid gain medium 1 shown here is a single piece (monocrystal) 1, but may consist of a plurality of pieces. In accordance with features characteristic of the present invention, the solid gain medium 1 is not polished or slightly polished, and contained as such in the transparent container 3 together with the index matching liquid (filling liquid) 2.

The transparent container 3 containing the solid gain medium 1 and the index matching liquid 2 is arranged in an optical resonator constituted by a rear mirror (total reflection mirror) M1 and an output mirror (partial transmission mirror) M2. The transparent container 3 is in the form of a slab, and window portions 4, 5 on both end faces thereof are formed with an angle satisfying the Brewster's condition relative to the outside (air). As mentioned in connection with the first embodiment, the container may be in the form of a rod instead of a slab, and the window portions may be formed on the condition not satisfying the Brewster's angle. Particulars concerning material for the solid gain medium 1 and selection of the index matching liquid 2 are the same as those in the first embodiment so that the explanation thereof will not be repeated.

In the laser oscillator shown in FIG. 2, when the excitation light 50 is radiated from excitation lamps (not shown) arranged on the side of the transparent container 3 to the transparent container 3 with the index matching liquid circulating cooling device 8 activated, the solid gain medium 1 immersed in the index matching liquid 2 is laser-excited, laser oscillation starts in the optical resonator constituted by the rear mirror M1 and the output mirror M2, and a laser beam S' is outputted from the output mirror M2.

Generally, energy efficiency of the laser oscillation can not be 100%. Part of the energy of the excitation light 50 necessarily turns into heat energy. If this causes a rise in temperature inside and outside the transparent container 3, it leads to a resonator loss due to distortion of the transparent container 3, dispersion due to the Doppler effect and the like and thereby deteriorates the output characteristics of the laser oscillator. In the present embodiment, the index matching liquid 2 is turned out to the side of the optical resonator and made to flow through the index matching liquid circulating cooling device 8. By doing so, a rise in temperature inside and outside the transparent container 3 is prevented so that deterioration of the output characteristics is prevented.

When the index matching liquid 2 is, in the transparent container 3, arranged to flow parallel to an optical axis of the optical resonator as in the present arrangement, it is advantageous in that the index matching liquid circulating cooling device 8 can be incorporated with more simple peripheral structure of the laser oscillator than in the case where the index matching liquid is arranged to flow in a direction crossing the optical axis (for example, perpendicular to the optical axis) as in a third embodiment described below. However, it is to be noted that the former arrangement is somewhat disadvantageous as compared to the latter in respect of a function of removing a temperature gradient which is likely to be produced ranging from a portion close to the axial center of the optical resonator to a peripheral portion thereof (see description of a third embodiment).

In the transparent container 3, the laser beam S' travels through the index matching liquid 2 and the solid gain medium 1. As in the first embodiment, since change in refractive index due on the boundary between the index matching liquid 2 and the solid gain medium 2 is small, scattering of light does not occur significantly when the light passes the boundary face, so that it does not cause a large resonator loss.

Thus, according to this embodiment, there is provided a laser oscillator having a small resonator loss using a solid gain medium not requiring high-degree polishing, and also capable of circulating and cooling the index matching liquid with simple structure.

### [Third embodiment]

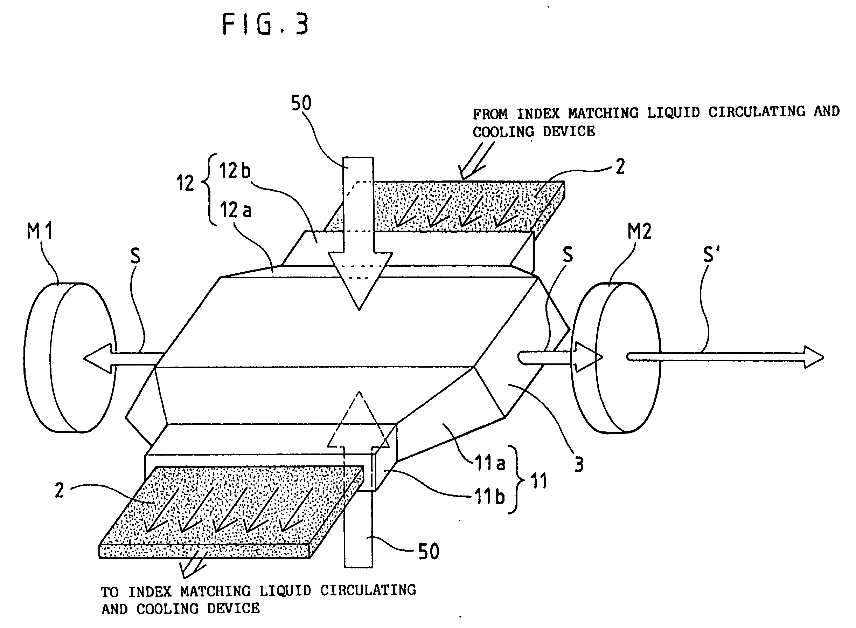

FIG. 3 is an illustration showing essential structure of a laser oscillator according to a third embodiment. Similar to the second embodiment shown in FIG. 2, the laser oscillator according to this embodiment is such that a solid gain medium (not shown) immersed in index matching liquid 2 is contained in a transparent container 3 and that the index matching liquid 2 is circulated and cooled, but it is different from the second embodiment in that the index matching liquid 2 is, in the transparent container 3, arranged to flow perpendicular to an optical axis of the optical resonator.

In this case, it is desirable to produce, in the transparent container 3, a smooth flow of the index matching liquid 2 perpendicular to the optical axis of the optical resonator, for example, by providing the transparent container 3 with an outlet port 11 and an inlet port 12 each consisting of a tapered pipe portion 11a, 12a and a flat pipe portion 11b, 12b. In this arrangement, the peripheral structure of the laser oscillator is somewhat complicated as compared to the above described second embodiment. However, the arrangement is advantageous in that a temperature gradient which is liable to be caused from a portion close to the axial center of the resonator to a peripheral portion thereof can be restrained since the index matching liquid 2 flows in a direction crossing the optical axis of the optical resonator.

When the index matching liquid 2 is made to flow in the transparent container 3 perpendicular to the optical axis of the optical resonator as in the present embodiment, it is easy to secure a relatively large cross-sectional area of the circulation passage. Therefore, even when circulation velocity is small, it is easy to secure a large circulation quantity of the index matching liquid 2 to thereby raise the efficiency of heat removal. It is to be noted that an index matching liquid circulating cooling device (see the second embodiment) arranged between the outlet port 11 and the inlet port 12, and excitation lamps (including reflecting mirrors) arranged beside the transparent container 3 are omitted from the illustration in FIG. 3.

Thus, according to this embodiment, there is provided a laser oscillator having a small resonator loss using a solid gain medium not requiring high-degree polishing, and capable of circulating and cooling the index matching liquid to efficiently restrain a temperature gradient in the radial direction of the resonator.

As described above, according to the present invention, using a solid gain medium which is substantially unpolished and the index matching fluid to suppress the resonator loss caused by the light scattering, there can be provided a laser oscillator at low cost, which has efficiency and output characteristics comparable to those of conventional laser oscillators which are of the same type but use a solid gain medium highly polished.

Further, since the solid gain medium is immersed in the index matching liquid, the present invention can be embodied using a plurality of bulk pieces of solid as the solid gain mediums without much increasing the scattering loss. This is economically advantageous because a larger solid gain medium (laser crystal) is more difficult to manufacture with high quality and at small cost. Furthermore, the index matching liquid which is in contact with the solid gain medium can also serve as heat radiation means. Therefore, it is possible to prevent deterioration of oscillation characteristics by a rise of temperature.

## Claims

1. A laser oscillator, comprising:
a solid gain medium;
liquid having a refractive index matching a refractive index of said solid gain medium;
an optical resonator; and
a transparent container disposed in said optical resonator for containing said solid gain medium and said liquid in a state that said solid gain mediums is immersed in said liquid.

2. A laser oscillator according to claim 1, wherein said solid gain medium has a surface of an average roughness Ra not less than 1 nm.

3. A laser oscillator according to claim 1, wherein said transparent container is in the form of a slab.

4. A laser oscillator according to claim 3, wherein said transparent container has window portions formed to satisfy Brewster's condition.

5. A laser oscillator according to claim 1, wherein said transparent container is in the form of a rod.

6. A laser oscillator according to claim 5, wherein said transparent container has window portions formed to satisfy Brewster's condition.

7. A laser oscillator according to claim 1, further comprising a circulation system connected to said transparent container, for circulating said liquid to flow within said transparent container and cooling said liquid.

8. A laser oscillator according to claim 7, wherein a flowing direction of said liquid in said transparent container is substantially parallel to an optical axis of said optical resonator.

9. A laser oscillator according to claim 7, wherein a flowing direction of said liquid in said transparent container is crossing an optical axis of said optical resonator.

10. A laser oscillator according to any one of claims 1 to 9, wherein said solid gain medium comprises a plurality of bulk pieces.
